# EUROPEAN PATENT APPLICATION

(11) **EP 2 077 681 A1**
(43) Date of publication of application: **08.07.2009**
(21) Application number: 08169330.1
(22) Date of filing: 03.02.2005
(51) Int. Cl.: H04W 4/06

(54) **Method and apparatus for sending signaling for multicast and broadcast services**

(30) Priority: 04.02.2004 US 542063 P
(62) Divisional of application: 05722789.4
(71) Applicant: Qualcomm Incorporated, San Diego, CA 92121-1714 (US)
(72) Inventor: Gaal, Peter, San Diego, 92121-1714 (US); Tiedemann, Edward, G., Jr., San Diego, 92121-1714 (US)
(74) Representative: Bardehle, Heinz

(57) **Abstract**

Signaling for each multicast/broadcast service is sent in group page messages in PCH slots assigned to the wireless devices and/or PCH slots designated for use for the service. Each group page message contains an identifier for a service. The designated PCH slots for different services may be overlapping to reduce the number of times the wireless devices need to wake up to receive page messages or staggered to reduce collision among the services. The wireless devices may be informed of a group page message being sent on the PCH for a given service by use of paging indicators that are assigned to the wireless devices and/or broadcast indicators that are assigned to the service. The paging indicators may be sent in QPCH slots assigned to the wireless devices and/or QPCH slots designated for use for the service. The BI bits are sent on the designated QPCH slots.

## Description

### I. Claim of Priority under 35 U.S.C. §119

The present Application for Patent claims priority to Provisional Application Serial No. 60/542,063, entitled "Method and Apparatus for Reducing Signaling Overhead and Delay Associated With Group Notifications Supporting Multiple Broadcast Services," filed February 4, 2004, and assigned to the assignee hereof and hereby expressly incorporated by reference herein.

### BACKGROUND

### II. Field

The present invention relates generally to communication systems, and more specifically to communication systems supporting multicast and broadcast services.

### III. Background

A communication system may provide unicast, multicast, and/or broadcast services. A unicast service provides point-to-point communication between at least one base station and a specific wireless device. A multicast service provides point-to-multipoint communication between at least one base station and a group of wireless devices. A broadcast service provides point-to-multipoint communication between at least one base station and all wireless devices within a designated broadcast area. Some examples of multicast and broadcast services include push-to-talk (PTT), news and data services, subscription-based services, and so on. Multicast and broadcast services may send data to wireless devices sporadically, periodically, or continuously.

A wireless device may operate in an idle state when it is not actively exchanging data with one or more base stations in the system. In the idle state, the wireless device typically monitors a paging channel (PCH) for messages applicable to the wireless device. Such messages may include page messages that alert the wireless device to the presence of an incoming call, page messages that carry signaling for multicast and/or broadcast services being received by the wireless device, and overhead messages that carry system and other information for the wireless device. To conserve battery power in the idle mode, the wireless device may operate in a slotted mode whereby (1) the system sends messages to the wireless device only at designated times and (2) the wireless device periodically (rather than continuously) monitors the PCH at the designated times for messages. To further reduce power consumption in the idle mode, a quick paging channel (QPCH) is often used to indicate whether a page message might be sent on the PCH for the wireless device. The QPCH carries paging indicators (or PI bits) that are transmitted as binary On/Off bits. The wireless device is assigned certain PI bits that are turned On if any messages are sent on the PCH for the wireless device. The wireless device is able to quickly detect the PI bits and to immediately enter sleep without processing the PCH if the PI bits indicate that no message will be sent on the PCH for the wireless device.

The system may need to send many page messages in order to support multicast and broadcast services as well as for normal system operation. It is desirable to send these page messages as fast as possible and using the least amount of system resources. It is also desirable to send these page messages such that the wireless devices can receive all of the applicable messages without consuming excessive battery power.

There is therefore a need in the art for techniques to efficiently send page messages for multicast and broadcast services.

### SUMMARY

Techniques for transmitting signaling for multicast and broadcast services in a manner to reduce signaling overhead and delay and to conserve battery power for reception are described herein. The signaling for each service may be sent in group page messages that contain an identifier (e.g., a FLOW_ID) for the service. These group page messages may be sent to multiple wireless devices receiving the service, which can reduce the number of page messages to send. The group page messages may be sent in PCH slots that are assigned to the wireless devices and/or in PCH slots that are designated for use for the service. The designated PCH slots for different services may be (1) overlapped to reduce the number of times the wireless devices need to wake up to receive page messages for these services or (2) staggered to reduce the likelihood of collision among the services, as described below.

The wireless devices may be informed of a group page message being sent on the PCH for a given service by use of paging indicators (PI bits) that are assigned to the wireless devices and/or broadcast indicators (BI bits) that are assigned to the service. The PI bits may be sent in QPCH slots assigned to the wireless devices and/or QPCH slots designated for use for the service. The BI bits are typically sent on the designated QPCH slots.

Various schemes for transmitting signaling using the QPCH and PCH are described below. These schemes transmit the PI bits and/or the BI bits on the QPCH and the group page messages on the PCH in different manners and are suitable for different types and combinations of services. Various aspects and embodiments of the invention are also described in further detail below.

### BRIEF DESCRIPTION OF THE DRAWINGS

FIG. 1 shows a communication system.

FIG. 2A shows the QPCH and PCH in cdma2000.

FIG. 2B shows different types of indicators sent in the QPCH.

FIG. 3A shows overlapping slot assignment for three services.

FIG. 3B shows staggered slot assignment for four services.

FIG. 4 shows an exemplary transmission on the QPCH and PCH for scheme 0.

FIGS. 5 through 9 show exemplary transmissions on the QPCH and PCH for schemes 1A through 1E, respectively, using PI bits and group page messages.

FIGS. 10 through 12 show exemplary transmissions on the QPCH and PCH for schemes 2 through 4, respectively, using BI bits and group page messages.

FIGS. 13A and 13B show processes for transmitting signaling using PI bits and BI bits, respectively, and group page messages.

FIGS. 14A and 14B show processes for receiving signaling sent using PI bits and BI bits, respectively, and group page messages.

FIG. 15 shows a process for transmitting QPCH indicators to reduce collisions.

FIG. 16 shows a block diagram of a base station and a wireless device.

### DETAILED DESCRIPTION

The word "exemplary" is used herein to mean "serving as an example, instance, or illustration." Any embodiment described herein as "exemplary" is not necessarily to be construed as preferred or advantageous over other embodiments.

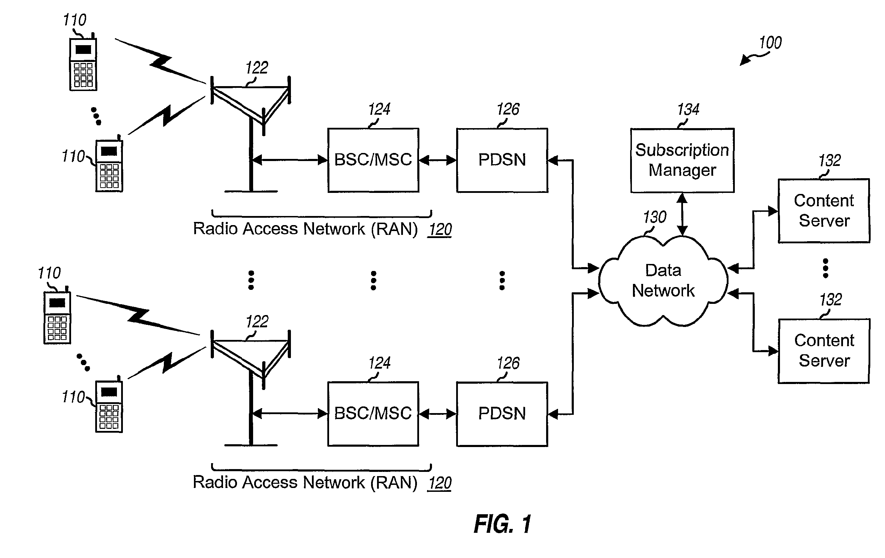

**FIG. 1** shows a communication system 100 capable of supporting multicast and broadcast services. System 100 includes a number of radio access networks (RANs) 120 that support wireless communication for a number of wireless devices 110. A wireless device may be fixed or mobile and may also be called a mobile station (MS), a user equipment (UE), a user terminal, a handset, a subscriber unit, or some other terminology. Each RAN 120 typically includes a number of base stations, base station controllers (BSCs), and mobile switching centers (MSCs). For simplicity, only one base station 122 and one BSC/MSC 124 are shown for each RAN 120 in FIG. 1. A base station is typically a fixed station that communicates with the wireless devices and may also be called a base transceiver system (BTS), a node B, an access point, or some other terminology. Each base station 122 provides communication coverage for a particular geographic area. BSC/MSC 124 couples to the base stations and provides coordination and control for these base stations.

BSC/MSC 124 for each RAN 120 may couple to a packet data serving node (PDSN) 126, which further couples to a data network 130. PDSN 126 provides packet data services for the wireless devices and performs various functions for setup, maintenance, and termination of data calls. Various network entities may be coupled to data network 130 such as content servers 132 and a subscription manager 134. Content servers 132 provide multicast and/or broadcast services. Subscription manager 134 performs authentication, authorization, and accounting (AAA) functions for the multicast and/or broadcast services. Although not shown in FIG. 1, BSC/MSC 124 for each RAN 120 may further couple to other systems and networks such as a public switched telephone network (PSTN), which is a circuit-switched telephone network that carries analog voice calls.

Each RAN 120 may be a Code Division Multiple Access (CDMA) network, a Time Division Multiple Access (TDMA) network, a Frequency Division Multiple Access (FDMA) network, an Orthogonal Frequency Division Multiple Access (OFDMA) network, or some other multiple access network. A CDMA network may implement one or more CDMA radio access technologies (RATs) such as cdma2000 and Wideband-CDMA (W-CDMA). cdma2000 covers IS-2000, IS-856, and IS-95 standards. A TDMA system may implement one or more TDMA RATs such as Global System for Mobile Communications (GSM). These various RATs and standards are well known in the art. W-CDMA and GSM are described in documents from a consortium named "3rd Generation Partnership Project" (3GPP). cdma2000 is described in documents from a consortium named "3rd Generation Partnership Project 2" (3GPP2). 3GPP and 3GPP2 documents are publicly available.

For clarity, the signaling transmission techniques are specifically described below for cdma2000. These techniques may also be used for Broadcast-Multicast Services (BCMCS) described in cdma2000 revision D.

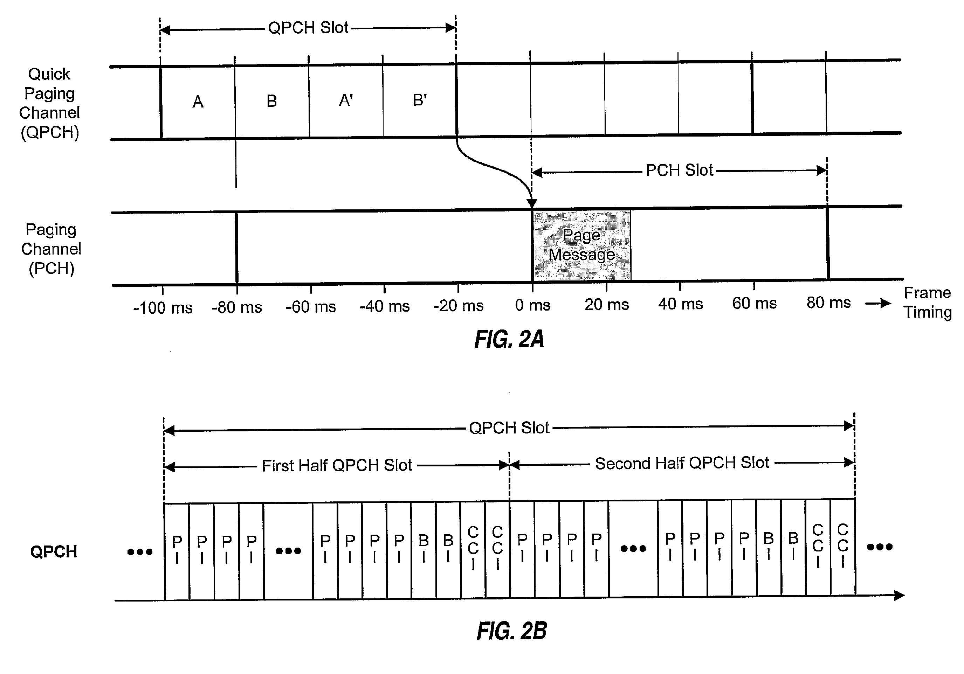

**FIG. 2A** shows the QPCH and PCH in cdma2000. The PCH is used to send page messages to idle wireless devices, which are wireless devices that have registered with the system and are in the idle mode. The QPCH is used to send indicators for the PCH. The QPCH may also be used for a broadcast control channel (BCCH) and a forward common control channel (FCCCH) in cdma2000. The QPCH and PCH are designed such that the idle wireless devices only need to be active for a small portion of the time to receive page messages.

In cdma2000, the PCH is partitioned into PCH slots. Each PCH slot has a duration of 80 milliseconds (ms) and is further partitioned into four 20 ms frames. Each wireless device is assigned one PCH slot in each slot cycle of T_{SC_x} seconds, where T_{SC_x}=1.28×2^{SCI_x} and SCI_*x* is a slot cycle index (SCI) that is applicable to the wireless device. The SCI can range from -4 to +7, and the slot cycle can range from 80 ms to 163.84 seconds, respectively. Each slot cycle contains 16 × 2^{SCI} PCH slots that are assigned indices (or offsets) of 1 through 16 × 2^{SCI}. Each wireless device is assigned a specific PCH slot index that is determined by identification information for the wireless device. This identification information may be an International Mobile Subscriber Identifier (IMSI) that is unique for each wireless device, a Mobile Identification Number (MIN), an Electronic Serial Number (ESN), a Temporary Mobile Subscriber ID (TMSI), and so on. The slot index for each wireless device is fixed, and the wireless device processes the PCH slot with that slot index in each slot cycle. More than one wireless device may be assigned to any given slot index.

In cdma2000, the QPCH is partitioned into QPCH slots. Each QPCH slot also has a duration of 80 ms and is typically associated with one PCH slot that starts 100 ms after the start of the QPCH slot. Each QPCH slot is further partitioned into four frames that are labeled as A, B, A', and B'. Each frame carries 192 indicators for 9600 bits/second (bps) rate and 96 indicators for 4800 bps rate.

**FIG. 2B** shows the different types of indicators sent in the QPCH. For the 9600 bps rate, the first 376 indicators in the A and B frames are paging indicators (or PI bits), the next four indicators are broadcast indicators (or BI bits), and the last four indicators are configuration change indicators (or CCI bits). For the 4800 bps rate, the first 188 indicators in the A and B frames are PI bits, the next two indicators are BI bits, and the last two indicators are CCI bits. The A' and B' frames contain the same number of PI, BI, and CCI bits as the A and B frames. Each indicator is transmitted with On/Off keying (OOK) so that a '0' bit value for an Off bit is transmitted with zero power and a '1' bit value for an On bit is transmitted at a designated power level.

Each wireless device that has registered with the system is assigned two PI bits for each assigned QPCH slot. The assigned QPCH slots are QPCH slots starting 100 ms before the assigned PCH slots. The location of each assigned PI bit within a QPCH slot is determined by a hashing function and changes from bit to bit to randomize collisions with other wireless devices. The pair of assigned PI bits for each assigned QPCH slot is sent such that either (1) the first PI bit is sent in frame A and the second PI bit is sent in frame A' or (2) the first PI bit is sent in frame B and the second PI bit is sent in frame B'. This transmission scheme ensures that the two PI bits are separated by at least 20 ms, and that the second PI bit arrives at least 20 ms before the start of the associated PCH slot. The QPCH functions like a control channel for the PCH. The PI bits in each QPCH slot are control signals that alert the wireless devices that page messages are about to be sent in the associated PCH slot.

To send a page message to a wireless device on the PCH, a base station turns On both PI bits in the QPCH slot assigned to the wireless device. Since more than one wireless device may map to any given PI bit, detecting the assigned PI bits as On does not guarantee that the wireless device will actually receive a page message in the associated PCH slot. However, the wireless device may interpret a PI bit that is detected as Off to mean that the wireless device does not need to process the associated PCH slot for page messages. The wireless device may then power down after processing the PI bits, without processing the PCH, to conserve power.

The QPCH and PCH may be used to send signaling for various multicast and broadcast services. These services may be categorized into two types as follows:
- Type I Services - include services (e.g., a video broadcast service) that send signaling mainly to indicate configuration changes. A content server for a type-I service may be able to synchronize configuration changes with slot cycle boundaries and may be able to use a long slot cycle. For example, configuration information for a type-I service may be sent periodically in a *Broadcast System Parameters Message* (BSPM) with an SCI of i and configuration changes may be sent periodically in a BSPM with an SCI of *j*, where *j > i*.
- Type II Services - include services (e.g., push-to-talk) that require short paging delays. A short slot cycle with a small SCI may be used for type-II services.

Different services may have different signaling requirements that may dictate the manner in which signaling should be sent for these services. For example, a push-to-talk service may need to page all wireless devices within a particular group whenever a user at one wireless device desires to talk. As another example, a broadcast service may need to send updated configuration information whenever there is a configuration change. Each service may be associated with a particular SCI that determines the slot cycle and hence the rate at which signaling may be sent for the service. Each service may be uniquely identified by an identifier, e.g., a FLOW_ID.

Signaling for each service may be sent to all wireless devices receiving that service using individual page messages, group page messages, or a combination of both. An individual page message is a page message that is addressed to a specific wireless device using an identifier (e.g., a 24-bit mobile ID) for the wireless device. A group page message is a page message that is addressed to a group of wireless devices using a broadcast identifier. For example, the FLOW_IDs for different services may be mapped to different broadcast identifiers. An individual page message may be sent using a *General Page Message* (GPM), a *Universal Page Message* (UPM), or some other message in cdma2000. A group page message may be sent using a *Data Burst Message* (DBM) or some other message in cdma2000.

Page messages may be sent in a manner to achieve the following goals:
1. Minimize the number of times each wireless device needs to wake up to process the QPCH and PCH for page messages.
2. Minimize the amount of system resources expended to send page messages to all recipient wireless devices for all services.
3. Minimize paging delay, especially for type-II services.

The first goal attempts to minimize power consumption to receive page messages so that battery life and standby time may be extended for the wireless devices. This goal may be achieved by sending as few QPCH indicators as possible and/or sending the indicators close to one another in time so that the wireless devices do not need to wake up often to receive these indicators. The indicators may also be sent in a manner to reduce the probability of collision. A collision occurs, e.g., when two or more services map to the same indicators. When these indicators are turned On, all wireless devices receiving any one of these services would process the PCH to look for page messages for these services even though only one service may have caused the indicators to be turned On. The collision thus causes some wireless devices to process the PCH when no page messages are sent for these wireless devices.

The second goal attempts to minimize system resource usage for sending page messages. This goal may be achieved by sending as few page messages as possible, e.g., using group page messages instead of individual page messages.

Paging delay refers to the amount of time from when a base station has information to send to the time a page message containing the information is actually sent. Type-I services are more tolerant to paging delay whereas type-II services are more sensitive to paging delay. Page messages may be sent in a manner to achieve the paging delay requirement for each service.

The three goals often conflict one another. In general, the wireless devices prefer to receive individual page messages, which can preserve battery life. The base stations prefer to send group page messages whenever the same page message has to be sent to at least two wireless devices in the same paging area, which can save resources.

Table 1 lists various schemes for sending page messages to the wireless devices. The second and third columns in Table 1 summarize the manner in which indicators are sent on the QPCH and the manner in which page messages are sent on the PCH, respectively. Each of these schemes is described in further detail below.

**Table 1**

| **Scheme** | **QPCH** | **PCH** |
|---|---|---|
| 0 | PI bits in assigned QPCR slots. | Individual page messages in assigned PCH slots. |
| 1A | PI bits in assigned QPCH slots. | Group page messages in assigned PCH slots. |
| 1B | PI bits in assigned QPCH slots. | Group page messages in designated PCH slots. |
| 1C | PI bits in assigned QPCH slots. | Group page messages in multiple designated PCH slots per slot cycle. |
| 1D | PI bits in designated QPCH slots. | Group page messages in designated PCH slots. |
| 1E | PI bits in designated QPCH slots. | Group page messages in multiple designated PCH slots per slot cycle. |
| 2 | BI bits defined in cdma2000 revision D. | Group page messages in designated PCH slots. |
| 3 | Virtual BI bits mapped to different locations. | Group page messages in designated PCH slots. |
| 4 | More BI bits that are located close together in time. | Group page messages in designated PCH slots. |
| 5 | PI bits in designated QPCH slots. | Group page messages in designated PCH slots. |

The following terms are used herein. An "assigned" QPCH slot is a QPCH slot that is assigned to a wireless device. A "designated" QPCH slot is a QPCH slot that is designated for use for a given service. An "assigned" PCH slot is a PCH slot that is assigned to a wireless device. A "designated" PCH slot is a PCH slot that is designated for use for a given service. An assigned QPCH slot precedes an assigned PCH slot by 100 ms in cdma2000. A designated QPCH slot may precede a designated PCH slot by 100 ms or some other amount of time. In general, page messages may be sent in assigned PCH slots for the wireless devices and/or designated PCH slots for the services. The designated PCH slots may be selected in various manners.

In a first slot assignment embodiment, the designated PCH slots for the services are defined such that:
1. The designated PCH slots for all services with the same SCI have the same PCH slot index; and
2. For any two services with different SCIs, the designated PCH slots for the service with the larger SCI coincide with the designated PCH slots for the service with the smaller SCI.
Constraint 1 maps all services with the same SCI to the same PCH slot for each slot cycle. Constraint 2 overlaps the PCH slots for services with different SCIs. With both constraints 1 and 2, each wireless device can process one PCH slot in each slot cycle for the smallest SCI and receive page messages for all services.

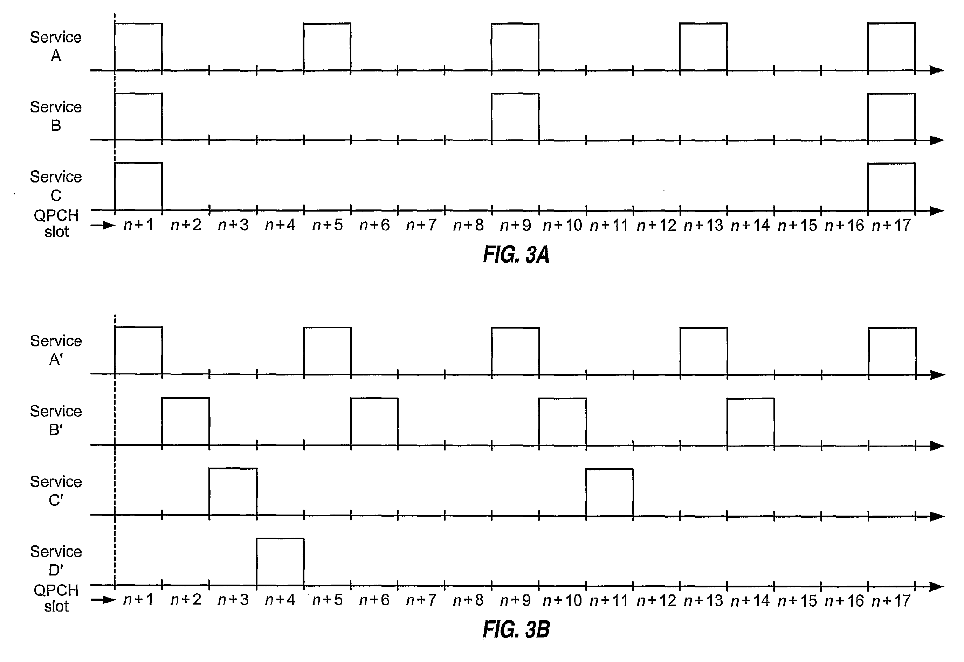

**FIG. 3A** shows an exemplary slot assignment for three services for the first slot assignment embodiment. In this example, service A has an SCI of -2 and is assigned the first PCH slot index in a slot cycle with four PCH slots. Service B has an SCI of -1 and is assigned the first PCH slot index in a slot cycle with eight PCH slots. Service C has an SCI of 0 and is assigned the first PCH slot index in a slot cycle with 16 PCH slots. For this example, a wireless device can process the first PCH slot for SCI of -2 and receive page messages for all three services.

In a second slot assignment embodiment, different services may be assigned different PCH slot indices. As an example, for services with SCI = 0 , there are 16 possible PCH slot indices in a slot cycle, and each service may be mapped to one of the 16 slot indices, e.g., based on the FLOW_ID for the service. The mapping may be limited to within a subrange of slot indices that is less than the total range of slot indices for the SCI. For example, a service may be mapped to a slot index between 1 through 4, with slot indices 5 through 16 being unused for the service. If the mapping from services to slot indices is made variable in time in order to minimize the probability of collision between different services, then a small subrange reduces variability in paging delay. A service with an SCI of *y* may also be mapped to different slot indices for SCI = *y* that represent a fixed slot index for a smaller SCI. For example, a service with SCI = 0 may be mapped to slot indices of 1, 5, 9, and 13 in different slot cycles, all of which correspond to a fixed slot index of 1 for SCI = -2 . In any case, the use of different slot indices for different services can reduce the probability of collision among these services and can distribute paging load across different PCH slots. However, a wireless device receiving multiple services may need to process multiple QPCH slots and/or multiple PCH slots in each slot cycle in order to receive page messages for all of these services.

**FIG. 3B** shows an exemplary slot assignment for four services for the second slot assignment embodiment. In this example, service A' has an SCI of -2 and is assigned the first PCH slot index in a 320 ms slot cycle with four PCH slots. Service B' also has an SCI of -2 but is assigned the second PCH slot index in the 320 ms slot cycle. Service C' has an SCI of -2 and is assigned the third PCH slot index in a 640 ms slot cycle. Service D' has an SCI of 0 and is assigned the fourth PCH slot index in a 1.28 sec slot cycle. In this example, the PCH slots for the four services do not overlap one another and collision can be avoided.

For both embodiments, each service may be mapped to a fixed slot index or different slot indices in different slot cycles. The mapping may be static or dynamic and may be performed based on an algorithm that is known to both the base stations and wireless devices.

Scheme 0 in Table 1 uses the QPCH and PCH to send individual page messages to the wireless devices. Each wireless device forms an SCI set containing the SCI for each service that the wireless device is receiving (SCI_*i*) as well as the SCI for the wireless device (SCI_x). The wireless device then selects the smallest SCI in the SCI set (called SCI _*s*) and monitors the QPCH in accordance with this SCI. A base station sends signaling for each service by sending individual page messages to all wireless devices receiving that service. The base station may send the individual page message for each wireless device in a PCH slot determined by the SCI for the service (SCI_*i*) or the SCI selected by the wireless device (SCI_*s*), where SCI_*s* may be smaller than SCI_*i*. Each wireless device processes its PI bits in the assigned QPCH slot corresponding to the selected SCI_*s* and, if these PI bits are turned On, further processes the associated PCH slot to receive page messages.

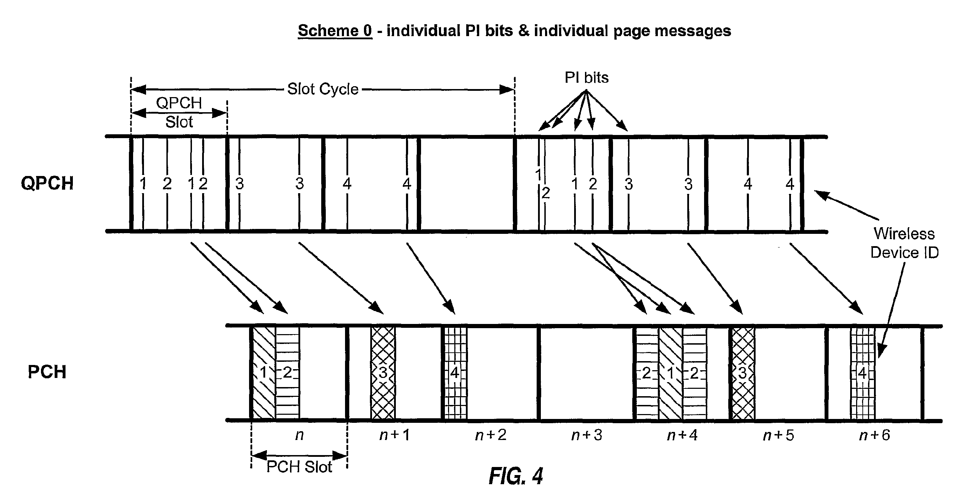

**FIG. 4** shows an exemplary transmission on the QPCH and PCH for scheme 0. In this example, four wireless devices 1 through 4 have SCIs of -2 and slot cycles of 320 ms (or four PCH slots). Wireless devices 1 and 2 are both assigned the first PCH slot index in the slot cycle, wireless device 3 is assigned the second PCH slot index, and wireless device 4 is assigned the third PCH slot index. The base station sends individual page messages to each wireless device in the assigned PCH slots. The base station turns On the PI bits for each wireless device that is to receive a page message on the PCH. The PI bits for each wireless device are denoted by vertical lines in the QPCH slots in FIG. 4, with the number imprinted on the vertical lines indicating the wireless device identifier. A wireless device may receive zero, one, or multiple page messages when its PI bits are turned On. A wireless device (e.g., wireless device 2 in FIG. 4) may also receive multiple messages for multiple services and/or for different types of information (e.g., page message, overhead message, and so on).

Scheme 0 minimizes the number of times each wireless device needs to process the QPCH and PCH since the PI bits and page messages are sent specifically to the wireless device. However, the same page message may be sent multiple times to different wireless devices receiving the same service. Much system resource may be expended to send individual page messages, especially when a large number of users are receiving the service.

Schemes 1A through 1E use the QPCH and PCH to send group page messages to the wireless devices. For these schemes, the PI bits are sent individually to the wireless devices, which then receive the same group page messages sent on the PCH.

Scheme 1A operates in the same manner as scheme 0, except that a group page message (instead of individual page messages) is sent in each PCH slot in which at least one wireless device is intended to receive the page message. Each wireless device monitors its PI bits in each assigned QPCH slot in the normal manner. If the PI bits are turned On, then the wireless device processes the PCH to look for group page messages sent for services being received by the wireless device as well as individual page messages sent specifically for the wireless device.

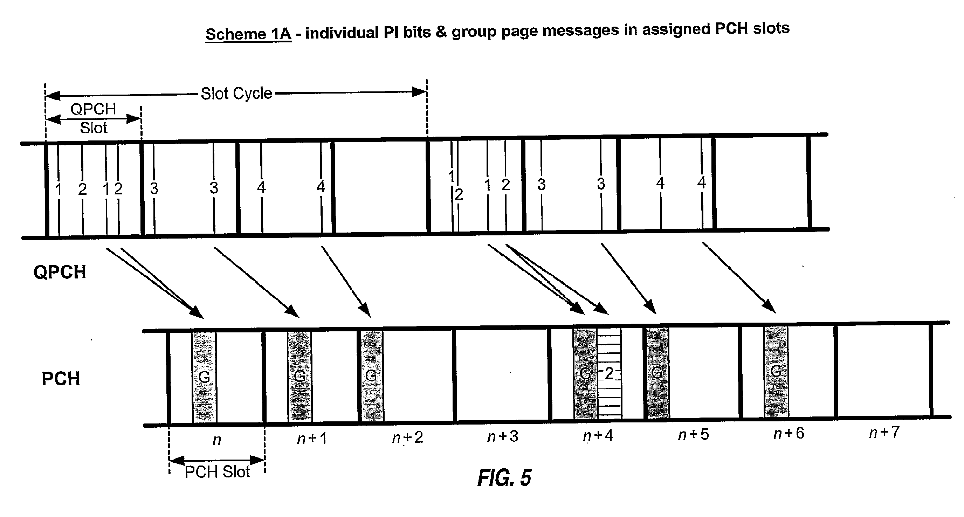

**FIG. 5** shows an exemplary transmission on the QPCH and PCH for scheme 1A. The base station turns On the PI bits for the four wireless devices 1 through 4, as described above for FIG. 4. The base station sends a group page message in each PCH slot with at least one wireless device assigned with that PCH slot. The group page messages are denoted by the letter "G" in FIG. 5. The base station may also send individual page messages (e.g., for wireless device 2 in slot *n* + 4 in FIG. 5) along with the group page messages. Each wireless device processes the assigned PCH slot whenever its PI bits are turned On to look for individual and group page messages sent for the wireless device.

Scheme 1B sends individual PI bits on the QPCH in the normal manner and sends group page messages in designated PCH slots. Each service is mapped to a specific PCH slot in each slot cycle, which is called a designated PCH slot or a group page slot. The designated PCH slots for each service are known by both the base stations and the wireless devices receiving that service. Group page messages for each service are sent in the designated PCH slots for the service, after all wireless devices receiving that service have a chance to receive their PI bits.

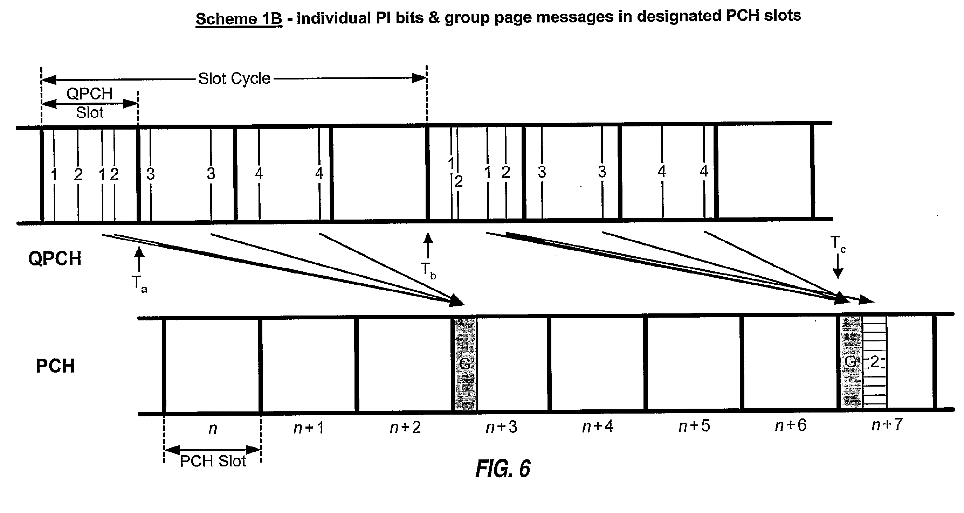

**FIG. 6** shows an exemplary transmission on the QPCH and PCH for scheme 1B. For this example, the services are mapped to the last PCH slot in each slot cycle. The base station turns On the PI bits for the four wireless devices 1 through 4 in their assigned QPCH slots, as described above for FIG. 4. The base station sends a single group page message in the designated PCH slot for each slot cycle. Each wireless device processes its PI bits in each assigned QPCH slot in the normal manner. If the PI bits are turned On, then the wireless device further processes the designated PCH slot and looks for group page messages sent for the services being received by the wireless device.

The base station may also send individual page messages for the wireless devices along with the group page messages in the same designated PCH slot. For the example shown in FIG. 6, the base station sends an individual page message to wireless device 2 after the group page message in PCH slot *n* +7 . This minimizes the number of PCH slots that each wireless device needs to process. Alternatively, the base station may send individual page messages to the wireless devices in their assigned PCH slots. This distributes the paging load across different PCH slots.

For scheme 1B, the longest possible paging delay is two slot cycles. To see this, consider a case in which the base station at time Tₐ obtains information to send to the wireless devices. The base station just missed the assigned QPCH slot for wireless devices 1 and 2 and would then need to wait until the assigned QPCH slot in the next slot cycle (at time T_{b}) to send the PI bits for these wireless devices. The base station may then send a group page message in the designated PCH slot at time T_{c} to the wireless devices. The paging delay for this worst-case scenario is from time Tₐ to time T_{c}, which is approximately two slot cycles. Sending PI bits in assigned QPCH slots and group page messages in designated PCH slots thus effectively doubles the worst-case paging delay.

Scheme 1C sends individual PI bits on the QPCH in the normal manner and sends group page messages in more than one designated PCH slot in each slot cycle. Each service is mapped to multiple (e.g., two) PCH slots in each slot cycle. The multiple designated PCH slots may be distributed (e.g., uniformly) across the slot cycle. The locations of the designated PCH slots for each service may be determined in the manner described above for scheme 1B, albeit with a smaller SCI than the actual SCI for the service. For each service, the same group page message is sent in all designated PCH slots for the slot cycle.

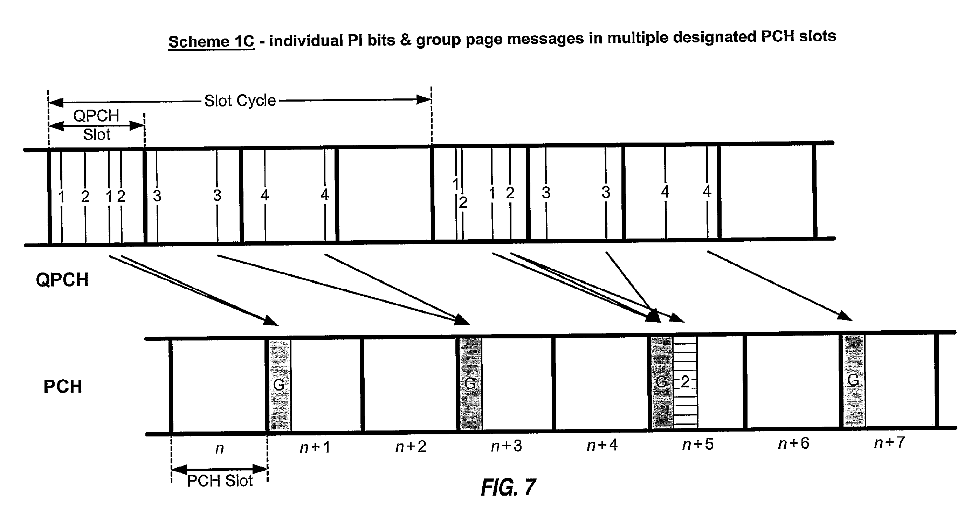

**FIG. 7** shows an exemplary transmission on the QPCH and PCH for scheme 1C. For this example, the services are mapped to the second and the last PCH slots in each 320 ms slot cycle. The base station turns On the PI bits for the four wireless devices 1 through 4 in their assigned QPCH slots, as described above for FIG. 4. The base station sends the same group page message in the two designated PCH slots for each slot cycle. Each wireless device processes its PI bits in each assigned QPCH slot in the normal manner. If the PI bits are turned On, then the wireless device further processes the designated PCH slot that is closest to the assigned QPCH slot and looks for group page messages sent for the services being received by the wireless device.

The base station may also send individual page messages for each wireless device in the designated PCH slot that is closest to the assigned PCH slot for the wireless device. For the example shown in FIG. 7, the base station sends an individual page message to wireless device 2 after the group page message in PCH slot *n* +5. Alternatively, the base station may send individual page messages to the wireless devices in the assigned PCH slots.

Scheme 1C reduces paging delay by sending the same page message multiple times. Scheme 1C also distributes paging load on the forward link if the individual page messages for the wireless devices are sent in the designated PCH slots. Since some page messages require responses from the wireless devices, scheme 1C can spread loading on the reverse link.

Scheme 1D sends individual PI bits on designated QPCH slots that are associated with the designated PCH slots and sends group page messages in one designated PCH slot in each slot cycle. Each service is mapped to a single PCH slot in each slot cycle, as described above for scheme 1B. However, instead of sending PI bits for each wireless device in the assigned QPCH slot, the PI bits for all wireless devices are sent in a single designated QPCH slot that is associated with the designated PCH slot.

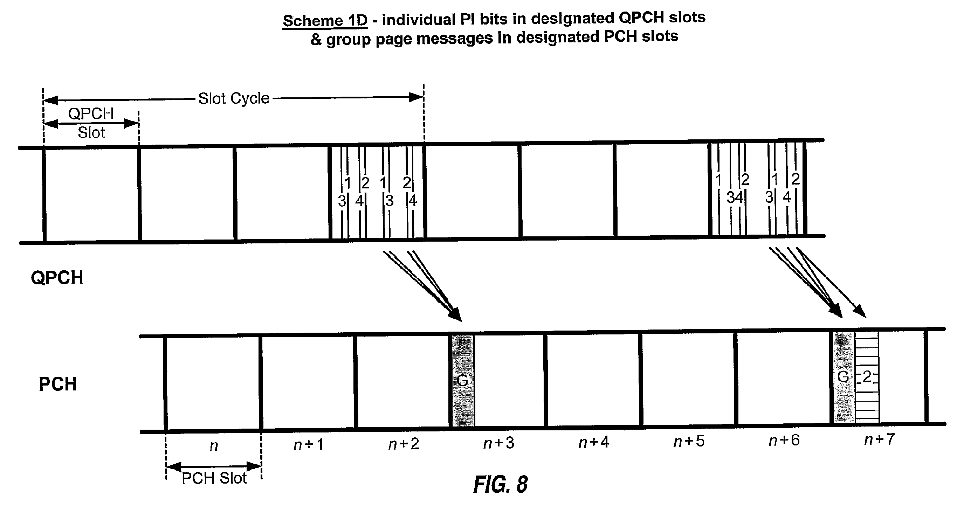

**FIG. 8** shows an exemplary transmission on the QPCH and PCH for scheme 1D. For this example, the services are mapped to the last PCH slot in each 320 ms slot cycle. For each slot cycle, the base station turns On the PI bits for all four wireless devices 1 through 4 in the designated QPCH slot if there is a pending group page message. The base station then sends the group page message in the designated PCH slot. Each wireless device processes its PI bits in the designated QPCH slot in the normal manner. If the PI bits are turned On, then the wireless device further processes the designated PCH slot and looks for group page messages sent for the services being received by the wireless device.

The base station may send PI bits and group page messages for the services in the designated QPCH slots and the designated PCH slots, respectively. The base station may also send individual page messages for each wireless device in the designated PCH slot, as shown in FIG. 8. In this case, the wireless devices only need to process the designated QPCH slots for PI bits, which minimizes the number of QPCH slots for which each wireless device needs to wake up. Alternatively, the base station may send individual page messages to the wireless devices in their assigned PCH slots, which distributes the paging load across different PCH slots. In this case, the wireless devices process the designated and assigned QPCH slots for the PI bits, and further process the associated PCH slots if the PI bits are turned On.

Scheme 1E sends individual PI bits on designated QPCH slots associated with the designated PCH slots and sends group page messages in multiple designated PCH slots in each slot cycle. Each service is mapped to multiple PCH slots in each slot cycle, as described above for scheme 1C. These multiple designated PCH slots are associated with multiple designated QPCH slots. The PI bits for each wireless device are sent in the designated QPCH slot that is closest to the assigned QPCH slot for the wireless device.

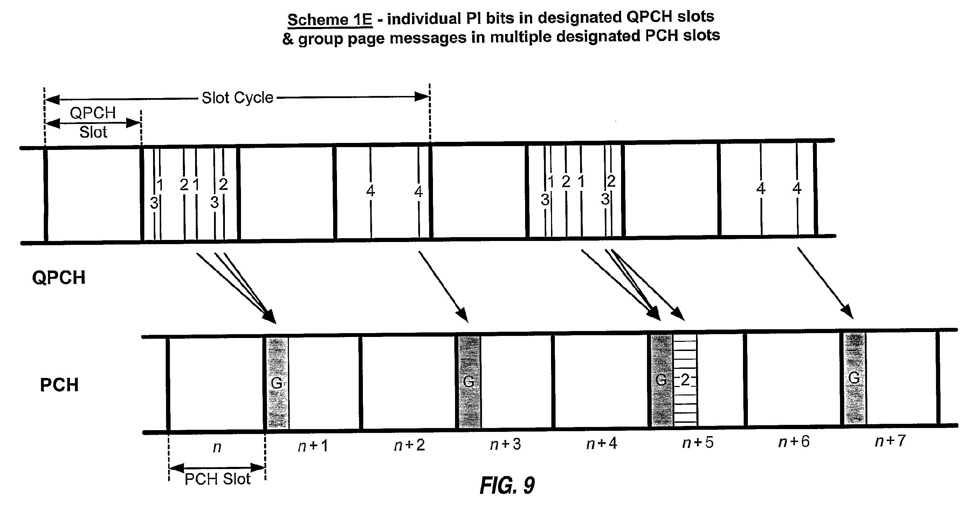

**FIG. 9** shows an exemplary transmission on the QPCH and PCH for scheme 1E. For this example, the services are mapped to the second and the last PCH slot in each 320 ms slot cycle. For each slot cycle, the base station turns On the PI bits for wireless devices 1, 2 and 3 in the first designated QPCH slot and turns On the PI bit for wireless device 4 in the second designated QPCH slot. The base station sends the same group page message in the two designated PCH slots. Each wireless device processes its PI bits in the designated QPCH slot applicable to the wireless device. If the PI bits are turned On, then the wireless device further processes the designated PCH slot and looks for group page messages sent for the services being received by the wireless device.

For simplicity, FIGS. 4 through 9 show transmission of PI bits and page messages for one service. Page messages for any number of services may be sent in similar manner.

Schemes 0 and 1A through 1E turn On the PI bits for individual wireless devices to notify these wireless devices of pending page messages on the PCH. The base station thus needs a mapping between the services and the wireless devices receiving these services. To send a page message for a given service, the base station first identifies all of the wireless devices receiving the service. The base station then determines the locations of the PI bits for these wireless devices and turns On these PI bits. The RAN may not have access to this mapping between the services and the wireless devices (e.g., this mapping may be located in subscription manager 134). In this case, the base station would not know which PI bits to turn On when there are page messages to send for the services.

BI bits may be used to notify the wireless devices of pending page messages on the PCH. Each service may be mapped to BI bits, with the mapping being known by both the base station and the wireless devices receiving the service. The base station turns On the BI bits whenever there are pending page messages for the service. The use of the BI bits can (1) eliminate the need for the mapping between services and wireless devices and (2) reduce the number of QPCH indicators to send for page messages.

Scheme 2 sends BI bits for notification of group page messages and sends the group page messages in designated PCH slots. For scheme 2, the BI bits for the services and the PI bits for the wireless devices are sent in different bit locations within a QPCH slot and do not overlap. Each service is mapped to a single PCH slot in each slot cycle. Different services may be mapped to overlapping PCH slots to minimize the number of slots that each wireless device needs to process, as described above for the first slot assignment embodiment. However, since the number of BI bits defined by cdma2000 revision D is limited (eight BI bits for 9600 bps and four BI bits for 4800 bps), different services may be mapped to different PCH slots (e.g., based on their FLOW_IDs) to reduce the likelihood of collision, as described above for the second slot assignment embodiment.

Each service is also mapped to one pair of the BI bits defined by cdma2000 revision D. This mapping may be based on a hash function (e.g., using the FLOW_ID) so that each service is mapped to different pairs of BI bits in different slot cycles to reduce the probability of collision with other services. For each service, the BI bits for the service are turned On if there is any group page message to send for the service, and the group page message is sent in the designated PCH slot.

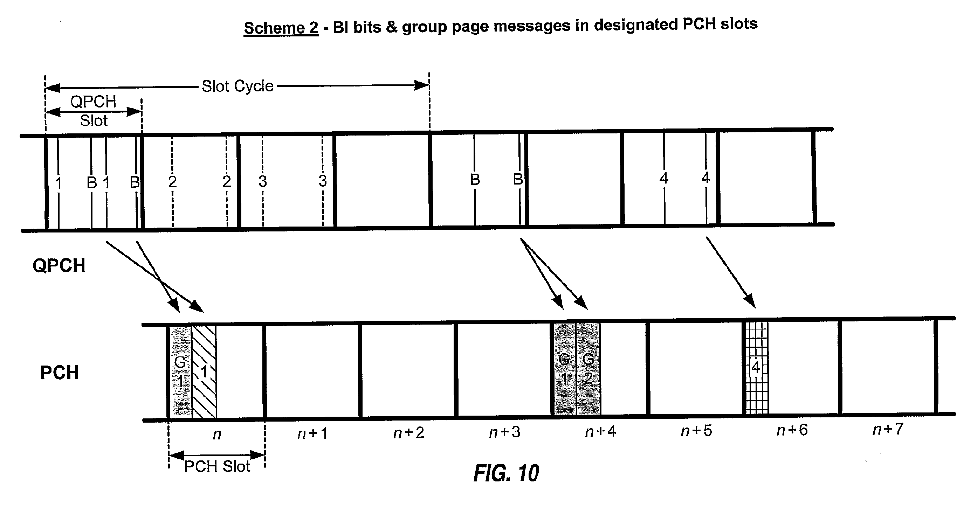

**FIG. 10** shows an exemplary transmission on the QPCH and PCH for scheme 2. In this example, two services labeled as G1 and G2 have SCIs of -2 and slot cycles of 320 ms. These services are both mapped to the first PCH slot in each slot cycle and are further mapped to the same pair of BI bits. The base station turns On the BI bits in each designated QPCH slot if there is any group page message to send for any service in the corresponding designated PCH slot. For the example shown in FIG. 10, the base station turns On the BI bits for PCH slot *n* and sends a group page message for service G1 in this PCH slot. The base station turns On the BI bits for PCH slot *n* + 4 and sends group page messages for services G1 and G2 in this PCH slot. The base station also turns On the PI bits and sends individual page messages in the assigned PCH slots for the wireless devices in the normal manner.

Each wireless device processes the BI bits for all of the services being received by that wireless device. Whenever the BI bits are turned On, the wireless device processes the PCH and looks for group page messages sent for the services being received by the wireless device. Each wireless device also processes its PI bits in the normal manner and, whenever these PI bits are turned On, processes the PCH to look for individual page messages sent for the wireless device. For the example shown in FIG. 10, wireless device 1 receives an individual page message in PCH slot *n*, and wireless device 4 receives an individual page message in PCH slot *n* + 6 .

Scheme 3 sends 'virtual' BI bits for notification of group page messages and sends the group page messages in designated PCH slots. The virtual BI bits may be sent in locations used for the PI bits. Each service is mapped to a single PCH slot in each slot cycle and is also mapped to one pair of virtual BI bits. The virtual BI bits for each service may be hashed to different locations from bit to bit and also from slot to slot (e.g., based on the FLOW_ID) in similar manner as the PI bits for each wireless device. The virtual BI bits for different services are thus spread across the QPCH slot. The mapping of the virtual BI bits for each service is known by both the base stations and the wireless devices receiving that service. For each service, the virtual BI bits for the service are turned On if there is any group page message to send for the service, and the group page messages are sent in the designated PCH slot.

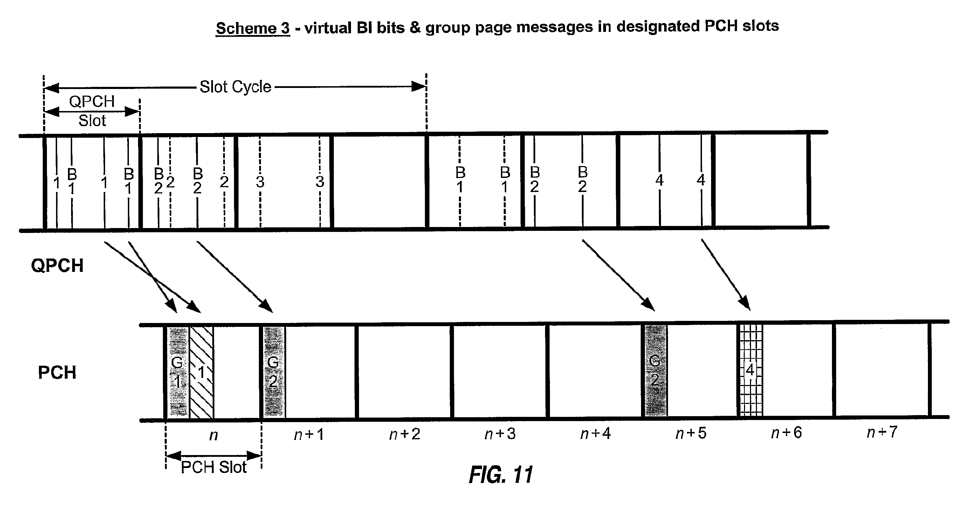

**FIG. 11** shows an exemplary transmission on the QPCH and PCH for scheme 3. In this example, the two services G1 and G2 are mapped to the first and second PCH slots in each slot cycle, respectively. The base station turns On the BI bits for each service if there is any group page message to send for the service. For the example shown in FIG. 11, the base station turns On the BI bits for service G1 in PCH slot *n* and sends a group page message for this service in this PCH slot. The base station turns On the BI bits for service G2 in PCH slot *n* + 1 and sends a group page message for service G2 in this PCH slot. The base station also turns On the PI bits and sends individual page messages in the assigned PCH slots for the wireless devices.

The number of virtual BI bits is much larger than the number of BI bits defined by cdma2000 revision D. The use of the virtual BI bits reduces the probability of collision among different services. The hashing of the virtual BI bits for each service randomizes collisions with the PI bits for the wireless devices and the BI bits for other services. The lower probability of collision reduces false wake ups for the PCH due to collisions. However, each wireless device would need to process the virtual BI bits for each service being received by the wireless device. Since the virtual BI bits for all of the services may be spread across a given QPCH slot, the wireless device may not be able to sleep between virtual BI bits.

Scheme 4 is similar to scheme 2, except that (1) the number of available BI bits is increased to reduce probability of collision and (2) these BI bits are located close together in time to allow the wireless devices to receive all of the applicable BI bits without having to wake up multiple times in a given QPCH slot. For scheme 4, the BI bits for the services and the PI bits for the wireless devices are sent in different bit locations within a QPCH slot and do not overlap. Each service is mapped to a single PCH slot in each slot cycle and is also mapped to one pair of BI bits. If the number of services is equal to or less than the number of available BI bits, then each service may be mapped to a different unique pair of BI bits and collision can be avoided. If the number of services is greater than the number of available BI bits, then each service may be hashed to different BI bits in different slots (where the hashing is different for the two BI bits in a given QPCH slot) to randomize collisions with other services. In any case, having more available BI bits reduces the probability of collision among the services. The BI bits for each service are turned On if there is any group page message to send for the service, and the group page message is sent in the designated PCH slot.

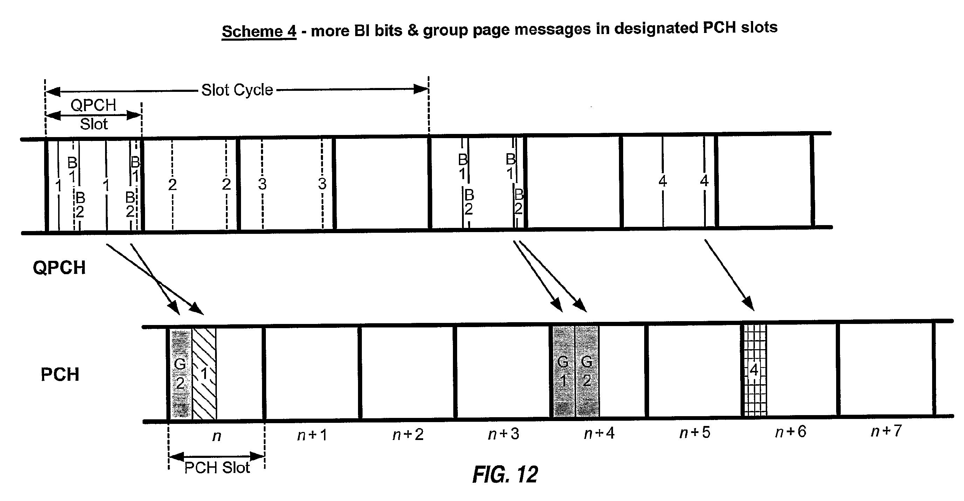

**FIG. 12** shows an exemplary transmission on the QPCH and PCH for scheme 4. In this example, the two services G1 and G2 are as described above for scheme 2. The base station turns On the BI bits for each service if there is any group page message to send for the service. For the example shown in FIG. 12, the base station turns On the BI bits for service G2 in PCH slot *n* and sends a group page message for this service in this PCH slot. The base station turns Off the BI bits for service G1 in PCH slot *n*, and the wireless devices receiving this service do not need to process the PCH for this service. The base station turns On the BI bits for services G1 and G2 in PCH slot *n* + 4 and sends group page messages for these services in this PCH slot. The base station also turns On the PI bits and sends individual page messages in the assigned PCH slots for the wireless devices. Each wireless device can process the BI bits for all services being received in one wake up because these BI bits are close together. Each wireless device only processes the PCH if the BI bits for any of the services being received by that wireless device are turned On.

The number of available BI bits may be fixed and selected based on the expected number of services, the desired probability of collision, and/or other factors. For example, 10, 20, or some other number of BI bits may be defined for each designated QPCH slot. The number of available BI bits may also be adjustable based on the actual number of services and/or other factors. In any case, the wireless devices have knowledge of the number of available BI bits, the locations for these BI bits, and the specific BI bits to which each service maps.

The BI bits for the services may have higher likelihood of being turned On than the PI bits for the wireless devices. To avoid collision between the PI bits and the BI bits, the PI bits for the wireless devices may be mapped to locations that are not used for the BI bits. For example, the hash function used to map the PI bits may be modified to avoid selecting the BI bit locations.

Scheme 5 is a generalization of schemes 1A, 1D and 1E. For scheme 5, a relative slot cycle index (SCIᵣₑₗ) is defined as the difference between the QPCH SCI and the effective PCH SCI. The QPCH SCI is the SCI for sending PI bits for a given wireless device. The effective PCH SCI is the SCI for sending group page messages for a service. For the example shown in FIG. 4, the relative SCI for scheme 1A is SCIᵣₑₗ = SCI + 2 since the PI bits for each wireless device are sent with a QPCH SCI of -2 (or every four QPCH slots), and the group page messages are sent with a PCH SCI of -4 (or every PCH slot). For the example shown in FIG. 8, the relative SCI for scheme 1D is SCIᵣₑₗ = 0. For the example shown in FIG. 9, the relative SCI for scheme 1E is SCI + 2 ≥ SCIᵣₑₗ ≥ 0. Other examples may have different relative SCIs. A good choice of relative SCI is dependent on various factors such as, e.g., the difference between the slot cycles for multicast/broadcast services and voice services, the relative paging load associated with the multicast/broadcast and voice services, and so on.

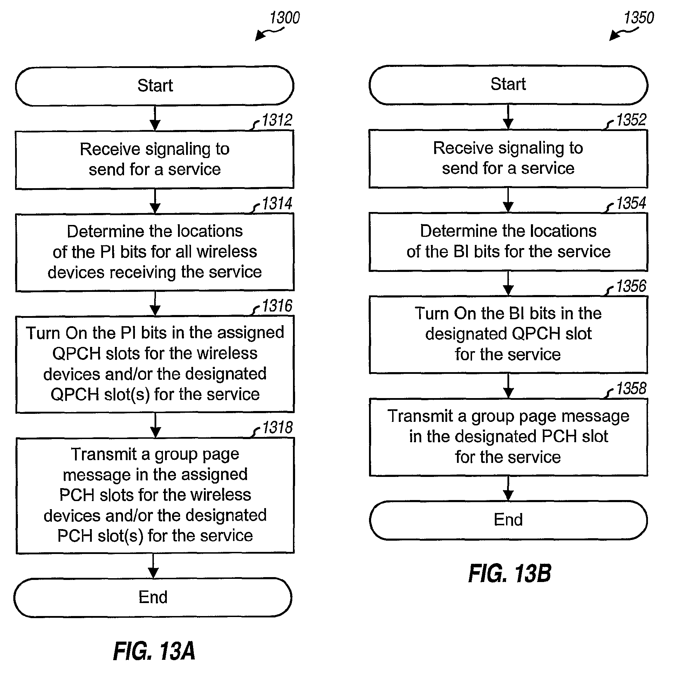

**FIG. 13A** shows a process 1300 for transmitting signaling for multicast and broadcast services using PI bits and group page messages. Process 1300 may be used for schemes 1A through 1E. Initially, a base station receives signaling to send for a service (block 1312). The base station identifies all wireless devices receiving the service and determines the locations of the PI bits for these wireless devices (block 1314). The base station turns On these PI bits in the assigned QPCH slots for these wireless devices (for schemes 1A, 1B and 1C) and/or the designated QPCH slot(s) for the service (for schemes 1D and 1E) (block 1316). The base station then transmits a group page message in the assigned PCH slots for these wireless devices (for scheme 1A) and/or the designated PCH slot(s) for the service (for schemes 1B, 1C, 1D and 1E) (block 1318).

**FIG. 13B** shows a process 1350 for transmitting signaling for multicast and broadcast services using BI bits and group page messages. Process 1350 may be used for schemes 2 through 4. Initially, a base station receives signaling to send for a service (block 1352). The base station then determines the locations of the BI bits for this service (block 1354). The service may be mapped to different BI bit locations for different schemes, as described above. The base station turns On these BI bits in the designated QPCH slot for the service (block 1356) and then transmits a group page message in the designated PCH slot for the service (block 1358).

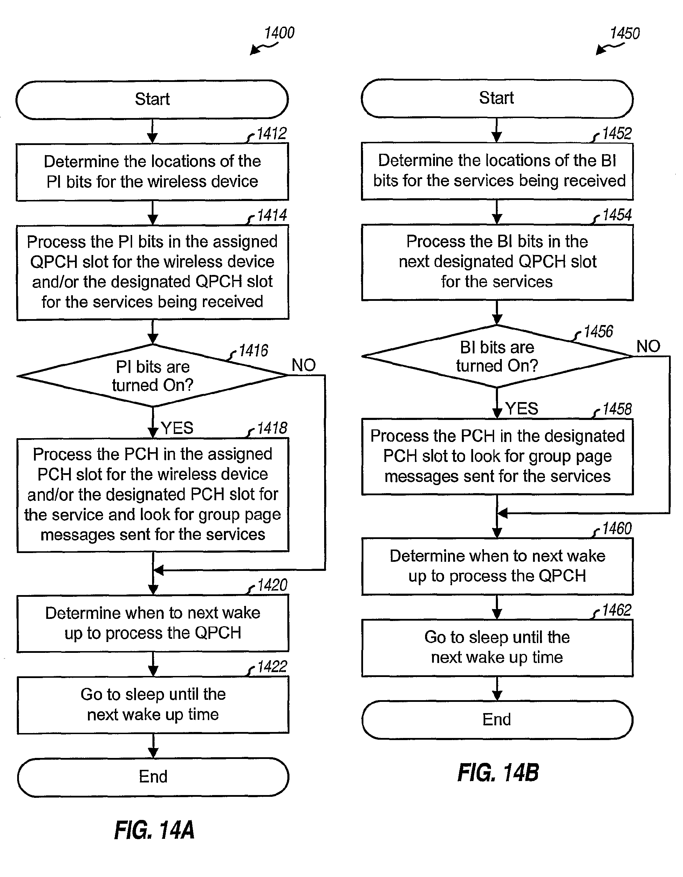

**FIG. 14A** shows a process 1400 for receiving signaling for multicast and broadcast services sent using PI bits and group page messages. Process 1400 may be used for schemes 1A through 1E. Initially, a wireless device determines the locations of its PI bits (block 1412). The wireless device then wakes up and processes these PI bits in the assigned QPCH slot (for schemes 1A, 1B and 1C) and/or the designated QPCH slot for the service being received (for schemes 1D and 1E) (block 1414). A determination is then made whether the PI bits are turned On (block 1416). If the answer is 'Yes', then the wireless device processes the PCH in the assigned PCH slots for the wireless device (for scheme 1A) and/or the designated PCH slot for the services being received (for schemes 1B, 1C, 1D and 1E) (block 1418). The wireless device looks for group page messages sent for the services as well as individual page messages for the wireless device. If the answer is 'No' for block 1416 and also after block 1418, the wireless device determines when it should next wake up to process the QPCH (block 1420). The wireless device then goes to sleep until this time (block 1422).

**FIG. 14B** shows a process 1450 for receiving signaling for multicast and broadcast services sent using BI bits and group page messages. Process 1450 may be used for schemes 2 through 4. Initially, a wireless device determines the locations of the BI bits for the services being received by the wireless device (block 1452). The wireless device then wakes up and processes these BI bits in the next designated QPCH slot for these services (block 1454). A determination is then made whether the BI bits are turned On (block 1456). If the answer is 'Yes', then the wireless device processes the PCH in the designated PCH slot and looks for group page messages sent for the services being received by the wireless device (block 1458). If the answer is 'No' for block 1456 and also after block 1458, the wireless device determines when it should next wake up to process the QPCH (block 1460). The wireless device then goes to sleep until this time (block 1462). The wireless device may also process its PI bits in the designated and/or assigned QPCH slots and may process the PCH for the designated and/or assigned PCH slots to look for individual page messages sent for the wireless device.

Various schemes have been described above for sending QPCH indicators and for sending the page messages for multicast and broadcast services. The particular scheme to use may be selected based on various factors such as, e.g., the number of services being supported, the paging requirements for these services, the number of wireless devices receiving these services, the distribution of these wireless devices, the paging area, the information available for sending page messages for the services, paging load for the system, system capabilities, and so on.

For example, scheme 5 can provide good performance and may be used if the system has the mapping between the services and the wireless devices receiving these services. To send a page message for a given service, the mapping is used to determine which wireless devices to send the page message. The PI bits for these wireless devices are determined and turned On, and the page message is sent as described above based on the relative SCI selected for the service. Scheme 5 has the following desirable features:
1. No new PCH/QPCH structure is needed but the mapping from QPCH slots to PCH slots is changed.
2. There is no significant impact on wireless devices not receiving a service since their PI bits are not turned On by the service.
3. A wireless device may receive its PI bits in a designated QPCH slot when receiving at least one service, in an assigned QPCH slot when not receiving any service, or in both the designated and assigned QPCH slots.
4. The implementation cost for the wireless devices is small.

Scheme 4 can provide good performance and may be used if the system does not have the mapping between the services and the wireless devices receiving these services. To send a page message for a given service, the BI bits for the service are determined and turned On, and the page message is sent in the designated PCH slots for the service. Scheme 4 has the following features:
1. A new QPCH structure is used but it is fully backward compatible.
2. The QPCH/PCH mapping is changed and the designated PCH slots used for the group page messages may be fixed or selected based on FLOW_IDs.
3. The number of BI bits and the mapping of services to BI bits are made known to the wireless devices (e.g., via signaling) and may be adjustable.
4. The base stations do not need to know which wireless devices (if any) are receiving any given service.

Multiple services may map to the same QPCH indicator for many of the schemes described above. When such a collision occurs and the indicator is turned On, it is desirable to know which service(s) turned On the indicator and have pending page messages on the PCH. If this information is available, then only wireless devices receiving the service(s) that turned On the indicator would need to process the PCH. All other wireless devices can skip the processing of the PCH and go to sleep directly.

The QPCH indicators are sent using On/Off keying in cdma2000. Additional information (such as which service(s) turned On a given indicator) may be conveyed by using a higher order encoding/modulation scheme than On/Off keying. In cdma2000, each QPCH indicator is composed of two symbols for the 9600 bps rate and four symbols for the 4800 bps rate. Typically, all of the symbols for a given QPCH indicator are either turned On or Off. An On indicator may be represented as "++" for the 9600 bps rate and as "++++" for the 4800 bps rate, where each "+" represents one symbol that is transmitted at the proper power level.

Additional information may be conveyed by transmitting each symbol with either normal polarity ("+") or inverted polarity ("-"), if the symbol is transmitted. Multiple indicator values may be defined with different sequences of symbol values. The services may then be mapped to different indicator values. Some exemplary encoding/modulation schemes are described below.

For the 9600 bps rate, the services may be arranged into three groups that are labeled as groups A, B and C. Group A may be represented by a signaling sequence "+-", group B may be represented by a sequence "-+ ", group C may be represented by a sequence "- -", and a combination of more than one group A, B and C may be represented by a sequence "++". The base station transmits the sequence "+-" for the QPCH indicator to send page messages for services in only group A, transmits the sequence "-+" to send page messages for services in only group B, transmits the sequence "- -" to send page messages for services in only group C, and transmits the sequence "++" to send page messages for services in any combination of groups A, B and C. New wireless devices that are aware of this encoding/modulation scheme would properly invert the symbols prior to combining and would be able to correctly detect the QPCH indicator. Legacy wireless devices that are unaware of this modulation scheme would simply combine the two received symbols and would likely detect an Off indicator for the "+-", "-+", and "- -" sequences and an On indicator for the "++" sequence. If page messages are sent infrequently for the services, then the "++" sequence is a low likelihood event, and false detection rate by the legacy wireless devices is also low.

For the 4800 bps rate, the services may be arranged into seven groups. Eight different signaling sequences may be defined as follows: "++++", "++--", "+-+-","+--+","----", "--++","-+-+", and "-++-". The last seven sequences may be assigned to the seven groups and sent for the QPCH indicator whenever a page message is being sent for only one group. The first sequence "++++" may be sent whenever page messages for more than one group are being sent. Alternatively, 16 different signaling sequences may be defined for the 16 possible combinations of values for the four symbols. Fifteen sequences may be assigned to fifteen groups and sent for the QPCH indicator whenever a page message is being sent for only one group. The first sequence "++++" may be sent whenever page messages are being sent for more than one group.

Several exemplary encoding/modulation schemes for the QPCH indicators are described above. Other encoding/modulation schemes may also be used for the QPCH indicators. The wireless devices use detection thresholds to determine which one of the possible values was sent for a given indicator. The detection thresholds may be set to achieve good detection performance in terms of missed detection and false alarm.

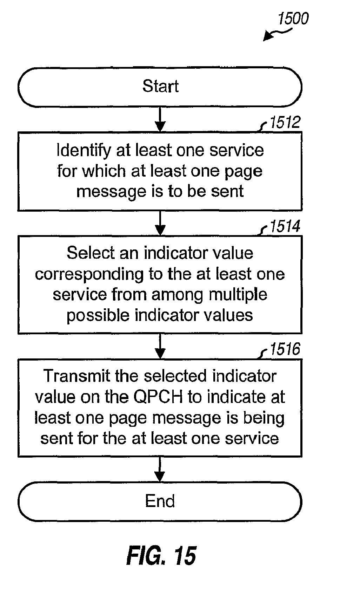

**FIG. 15** shows a process 1500 for sending QPCH indicators in a manner to reduce the likelihood of collisions. Initially, at least one service for which at least one page message is to be sent is identified (block 1512). An indicator value corresponding to the at least one service is selected from among multiple possible indicator values (block 1514). This selection may be made based on a table that may be formed as described above. The selected indicator value is then transmitted on the QPCH to indicate at least one page message is being sent for the at least one service (block 1516).

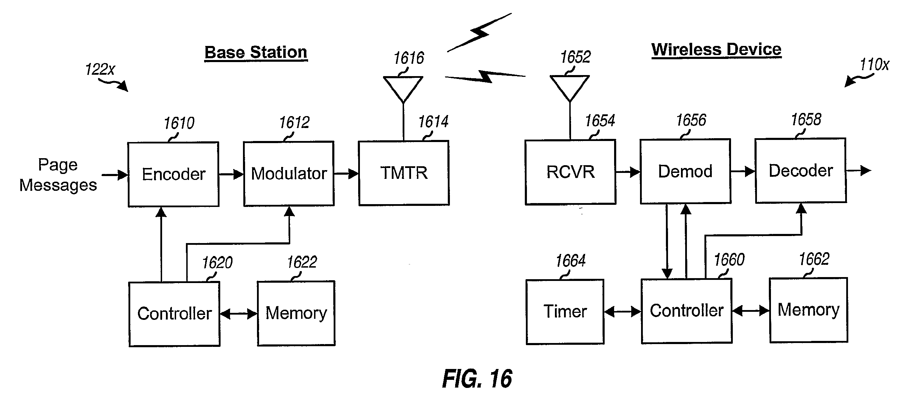

**FIG. 16** shows a block diagram of an embodiment of a base station 122x and a wireless device 110x. At base station 122x, an encoder 1610 receives data for page messages and other messages and processes (e.g., encodes, interleaves, and symbol maps) the received data. A modulator 1612 performs channelization, spectral spreading, scrambling, and so on for various traffic and control channels (e.g., the QPCH and PCH) and provides a stream of data chips. A transmitter unit (TMTR) 1614 conditions (e.g., converts to analog, amplifies, filters, and frequency upconverts) the data chips and generates a forward link signal, which is transmitted via an antenna 1616.

At wireless device 110x, an antenna 1652 receives the forward link signal from base station 122x and provides a received signal to a receiver unit (RCVR) 1654. Receiver unit 1654 conditions (e.g., filters, amplifies, and frequency downconverts) the received signal, digitizes the conditioned signal, and provides data samples. A demodulator (Demod) 1656 processes the data samples and provides symbol estimates. Demodulator 1656 further performs detection for QPCH indicators as directed by a controller 1660. A decoder 1658 processes (e.g., demaps, deinterleaves, and decodes) the symbol estimates and provides decoded data for page and other messages.

Controllers 1620 and 1660 direct the operation at base station 122x and wireless device 110x, respectively. Controller 1620 and 1660 may also perform various functions for signaling transmission and reception, respectively. Memory units 1622 and 1662 store data and program codes for controllers 1620 and 1660, respectively. A timer 1664 provides time information, which is used by controller 1660 to determine when to wake up to process the QPCH and PCH.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill in the art would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a wireless device or a base station. In the alternative, the processor and the storage medium may reside as discrete components in a wireless device or a base station.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the principles and novel features disclosed herein.
Further preferred embodiments of the invention are mentioned as follows:
1. A method of transmitting signaling in a communication system, comprising:
   determining locations of paging indicators for a plurality of wireless devices receiving a service;
   transmitting the paging indicators to indicate a page message being sent for the service; and
   transmitting the page message for the service to the plurality of wireless devices.
2. The method of claim 1, further comprising: forming the page message with an identifier for the service.
3. The method of claim 1, wherein the transmitting the paging indicators comprises transmitting the paging indicators for each of the plurality of wireless devices in a slot assigned to the wireless device.
4. The method of claim 1, wherein the transmitting the paging indicators comprises transmitting the paging indicators for all of the plurality of wireless devices in a designated slot for the service.
5. The method of claim1, wherein the service is associated with multiple designated slots in each slot cycle, and wherein the transmitting the paging indicators comprises transmitting the paging indicators for each of the plurality of wireless devices in a designated slot that most closely follows a slot assigned to the wireless device.
6. The method of claim 1, wherein the transmitting the page message comprises transmitting the page message to each of the plurality of wireless devices in a slot assigned to the wireless device.
7. The method of claim 1, wherein the transmitting the page message comprises transmitting the page message to all of the plurality of wireless devices in a designated slot for the service.
8. The method of claim 1, wherein the transmitting the page message comprises transmitting the page message in multiple designated slots for the service.
9. An apparatus in a communication system, comprising:
   a controller operative to determine locations of paging indicators for a plurality of wireless devices receiving a service; and
   a transmitter unit operative to transmit the paging indicators to indicate a page message being sent for the service and to transmit the page message for the service to the plurality of wireless devices.
10. The apparatus of claim 9, wherein the transmitter unit is operative to transmit the paging indicators for each of the plurality of wireless devices in a slot assigned to the wireless device.
11. The apparatus of claim 9, wherein the transmitter unit is operative to transmit the paging indicators for the plurality of wireless devices in at least one designated slot for the service.
12. The apparatus of claim 9, wherein the transmitter unit is operative to transmit the page message to each of the plurality of wireless devices in a slot assigned to the wireless device.
13. The apparatus of claim 9, wherein the transmitter unit is operative to transmit the page message to the plurality of wireless devices in at least one designated slot for the service.
14. An apparatus in a communication system, comprising:
   means for determining locations of paging indicators for a plurality of wireless devices receiving a service;
   means for transmitting the paging indicators to indicate a page message being sent for the service; and
   means for transmitting the page message for the service to the plurality of wireless devices.
15. The apparatus of claim 14, wherein the means for transmitting the paging indicators comprises means for transmitting the paging indicators for each of the plurality of wireless devices in a slot assigned to the wireless device.
16. The apparatus of claim 14, wherein the means for transmitting the paging indicators comprises means for transmitting the paging indicators for the plurality of wireless devices in at least one designated slot for the service.
17. The apparatus of claim 14, wherein the means for transmitting the page message comprises means for transmitting the page message to each of the plurality of wireless devices in a slot assigned to the wireless device.
18. The apparatus of claim 14, wherein the means for transmitting the page message comprises means for transmitting the page message to the plurality of wireless devices in at least one designated slot for the service.
19. A method of transmitting signaling in a communication system, comprising:
   determining locations of broadcast indicators for a service, wherein the number of broadcast indicators available for use in the system is greater than the number of broadcast indicators specified by cdma2000 revision D;
   transmitting the broadcast indicators to indicate a page message being sent for the service; and
   transmitting the page message for the service to a plurality of wireless devices.
20. The method of claim 19, wherein the determining the locations of the broadcast indicators for the service comprises mapping the service to pseudo-random locations among a predetermined number of locations available for broadcast indicators.
21. The method of claim 19, wherein the determining the locations of the broadcast indicators for the service comprises mapping the service to fixed locations among a predetermined number of locations available for broadcast indicators.
22. The method of claim 19, wherein the determining the locations of the broadcast indicators for the service comprises mapping the service to pseudo-random locations among all locations available for paging indicators and broadcast indicators.
23. The method of claim 19, further comprising: selecting the number of broadcast indicators available for use based on at least one criterion.
24. The method of claim 19, further comprising: assigning a plurality of services to overlapping slots to reduce the number of slots to process for page messages for the plurality of services.
25. The method of claim 19, further comprising: assigning a plurality of services to different slots to reduce collision among the plurality of services.
26. The method of claim 19, wherein the transmitting the broadcast indicators comprises transmitting the broadcast indicators in a designated slot for the service.
27. The method of claim 19, wherein the transmitting the page message comprises transmitting the page message in a designated slot for the service.
28. An apparatus in a communication system, comprising:
   means for determining locations of broadcast indicators for a service, wherein the number of broadcast indicators available for use in the system is greater than the number of broadcast indicators specified by cdma2000 revision D;
   means for transmitting the broadcast indicators to indicate a page message being sent for the service; and
   means for transmitting the page message for the service to a plurality of wireless devices.
29. The apparatus of claim 28, wherein the means for determining the locations of the broadcast indicators for the service comprises means for mapping the service to pseudo-random or fixed locations among a predetermined number of locations available for broadcast indicators.
30. The apparatus of claim 28, wherein the means for determining the locations of the broadcast indicators for the service comprises mapping the service to pseudo-random locations among all locations available for paging indicators and broadcast indicators.
31. The apparatus of claim 28, further comprising: means for assigning a plurality of services to overlapping slots to reduce the number of slots to process for page messages for the plurality of services.
32. The apparatus of claim 28, further comprising: means for assigning a plurality of services to different slots to reduce collision among the plurality of services.
33. A method of receiving signaling in a communication system, comprising:
   determining locations of paging indicators for a wireless device;
   processing the paging indicators at the determined locations to ascertain whether a page message is potentially being sent for a service being received by the wireless device and at least one other wireless device; and
   if the paging indicators indicate a page message is potentially being sent, processing a paging channel to look for the page message for the service.
34. The method of claim 33, further comprising: receiving the paging indicators in a slot assigned to the wireless device.
35. The method of claim 33, further comprising: receiving the paging indicators in a designated slot for the service.
36. The method of claim 33, further comprising: processing the paging channel in a slot assigned to the wireless device.
37. The method of claim 33, further comprising: processing the paging channel in a designated slot for the service.
38. A method of receiving signaling in a communication system, comprising:
   determining locations of broadcast indicators for a service being received by a plurality of wireless devices, wherein the number of broadcast indicators available for use in the system is greater than the number of broadcast indicators specified by cdma2000 revision D;
   processing the broadcast indicators at the determined locations to ascertain whether a page message is potentially being sent for the service; and
   if the paging indicators indicate a page message is potentially being sent, processing a paging channel to look for the page message for the service.
39. The method of claim 38, further comprising: receiving the broadcast indicators in a designated slot for the service.
40. The method of claim 38, further comprising: processing the paging channel in a designated slot for the service.
41. A method of transmitting indicators in a communication system, comprising:
   identifying at least one service for which at least one page message is to be sent;
   selecting an indicator value from among a plurality of possible indicator values and corresponding to the at least one service; and
   transmitting the selected indicator value to indicate at least one page message is being sent for the at least one service.
42. The method of claim 41, wherein one of the plurality of possible indicator values corresponds to page messages being sent for multiple groups of services, and wherein each remaining one of the plurality of possible indicator values corresponds to at least one page message being sent for a respective group of services.
43. The method of claim 41, further comprising: forming the plurality of possible indicator values such that one indicator value is detectable as a paging indicator that is turned On and each of remaining indicator values is detectable as a paging indicator that is turned Off.
44. An apparatus in a communication system, comprising:
   means for identifying at least one service for which at least one page message is to be sent;
   means for selecting an indicator value from among a plurality of possible indicator values and corresponding to the at least one service; and
   means for transmitting the selected indicator value to indicate at least one page message is being sent for the at least one service.
45. The apparatus of claim 44, further comprising: means for forming the plurality of possible indicator values such that one indicator value is detectable as a paging indicator that is turned On and each of remaining indicator values is detectable as a paging indicator that is turned Off.

## Claims

1. A method of transmitting signaling in a communication system, comprising:
determining locations of broadcast indicators for a service, wherein the number of broadcast indicators available for use in the system is greater than the number of broadcast indicators specified by cdma2000 revision D;
transmitting the broadcast indicators to indicate a page message being sent for the service; and
transmitting the page message for the service to a plurality of wireless devices.

2. The method of claim 1, wherein the determining the locations of the broadcast indicators for the service comprises mapping the service to pseudo-random locations among a predetermined number of locations available for broadcast indicators.

3. The method of claim 1, wherein the determining the locations of the broadcast indicators for the service comprises mapping the service to fixed locations among a predetermined number of locations available for broadcast indicators.

4. The method of claim 1, wherein the determining the locations of the broadcast indicators for the service comprises mapping the service to pseudo-random locations among all locations available for paging indicators and broadcast indicators.

5. The method of claim 1, further comprising:
selecting the number of broadcast indicators available for use based on at least one criterion.

6. The method of claim 1, further comprising:
assigning a plurality of services to overlapping slots to reduce the number of slots to process for page messages for the plurality of services.

7. The method of claim 1, further comprising:
assigning a plurality of services to different slots to reduce collision among the plurality of services.

8. The method of claim 1, wherein the transmitting the broadcast indicators comprises transmitting the broadcast indicators in a designated slot for the service.

9. The method of claim 1, wherein the transmitting the page message comprises transmitting the page message in a designated slot for the service.

10. An apparatus in a communication system, comprising:
means for determining locations of broadcast indicators for a service, wherein the number of broadcast indicators available for use in the system is greater than the number of broadcast indicators specified by cdma2000 revision D;
means for transmitting the broadcast indicators to indicate a page message being sent for the service; and
means for transmitting the page message for the service to a plurality of wireless devices.

11. The apparatus of claim 10, wherein the means for determining the locations of the broadcast indicators for the service comprises means for mapping the service to pseudo-random or fixed locations among a predetermined number of locations available for broadcast indicators.

12. The apparatus of claim 10, wherein the means for determining the locations of the broadcast indicators for the service comprises mapping the service to pseudo-random locations among all locations available for paging indicators and broadcast indicators.

13. The apparatus of claim 10, further comprising:
means for assigning a plurality of services to overlapping slots to reduce the number of slots to process for page messages for the plurality of services.

14. The apparatus of claim 10, further comprising:
means for assigning a plurality of services to different slots to reduce collision among the plurality of services.

15. A method of receiving signaling in a communication system, comprising:
determining locations of broadcast indicators for a service being received by a plurality of wireless devices, wherein the number of broadcast indicators available for use in the system is greater than the number of broadcast indicators specified by cdma2000 revision D;
processing the broadcast indicators at the determined locations to ascertain whether a page message is potentially being sent for the service; and
if the paging indicators indicate a page message is potentially being sent, processing a paging channel to look for the page message for the service.

16. The method of claim 15, further comprising:
receiving the broadcast indicators in a designated slot for the service.

17. The method of claim 15, further comprising:
processing the paging channel in a designated slot for the service.

18. A method of transmitting indicators in a communication system, comprising:
identifying at least one service for which at least one page message is to be sent; selecting an indicator value from among a plurality of possible indicator values and corresponding to the at least one service; and
transmitting the selected indicator value to indicate at least one page message is being sent for the at least one service.

19. The method of claim 18, wherein one of the plurality of possible indicator values corresponds to page messages being sent for multiple groups of services, and wherein each remaining one of the plurality of possible indicator values corresponds to at least one page message being sent for a respective group of services.

20. The method of claim 18, further comprising:
forming the plurality of possible indicator values such that one indicator value is detectable as a paging indicator that is turned On and each of remaining indicator values is detectable as a paging indicator that is turned Off.

21. An apparatus in a communication system, comprising:
means for identifying at least one service for which at least one page message is to be sent;
means for selecting an indicator value from among a plurality of possible indicator values and corresponding to the at least one service; and
means for transmitting the selected indicator value to indicate at least one page message is being sent for the at least one service.

22. The apparatus of claim 21, further comprising:
means for forming the plurality of possible indicator values such that one indicator value is detectable as a paging indicator that is turned On and each of remaining indicator values is detectable as a paging indicator that is turned Off.
